# EUROPEAN PATENT SPECIFICATION

(11) **EP 4 174 548 B1**
(45) Date of publication and mention of the grant of the patent: **22.01.2025**
(21) Application number: 21832388.9
(22) Date of filing: 12.03.2021
(51) Int. Cl.: G02B 7/00, G02B 25/00, F41G 11/00, G02B 7/02

(54) **EXTERNAL CONNECTION DEVICE, EYEPIECE MODULE AND HANDHELD APPARATUS**
EXTERNE VERBINDUNGSVORRICHTUNG, OKULARMODUL UND HANDGERÄT
DISPOSITIF DE CONNEXION EXTERNE, MODULE OCULAIRE ET APPAREIL PORTATIF

(30) Priority: 28.06.2020 CN 202021216078 U
(43) Date of publication of application: 03.05.2023
(73) Proprietor: Hangzhou Hikmicro Sensing Technology Co., Ltd., Hangzhou Zhejiang 311501 (CN)
(72) Inventor: YANG, Jinhua, Hangzhou, Zhejiang 311501 (CN); YUAN, Weijun, Hangzhou, Zhejiang 311501 (CN)
(74) Representative: BRP Renaud & Partner mbB Rechtsanwälte Patentanwälte Steuerberater
(86) International application number: PCT/CN2021/080574
(87) International publication number: WO 2022/001180

(56) References cited:
- CN-A- 108 845 473
- CN-A- 111 258 020
- CN-U- 203 858 404
- CN-U- 206 332 726
- CN-U- 207 112 322
- CN-U- 208 588 890
- CN-U- 212 135 037
- CN-Y- 2 427 822
- JP-A- 2009 251 336
- US-A1- 2018 039 165
- US-A1- 2018 078 124

## Description

The present application claims the priority to a Chinese patent application No. 202021216078.4 filed with the China National Intellectual Property Administration on June 28, 2020 and entitled "EXTERNAL CONNECTION DEVICE, EYEPIECE MODULE AND HANDHELD APPARATUS".

### Technical field

The present disclosure relates to the technical field of hand-held apparatus accessories, in particular to an external connection device, an eyepiece module and a hand-held apparatus.

### Background

Many hand-held apparatuses are equipped with observation structures, such as lens components, sights, etc., and these observation structures all include eyepiece modules. At present, in order to meet the applicability and versatility of different scenarios, the eyepiece module needs to be additionally equipped with a functional component such as a night vision component and a focusing component based on an extended external tool. However, the extended external tool can only adapt to a functional structure of one size. When the eyepiece module is equipped with a functional structure of a different size, the extended external tool needs to be replaced, and the existing extended external tool undoubtedly has poor applicability.

Publication US 2018/0078124 A1 discloses prior art.

### Summary

The present disclosure discloses an external connection device, an eyepiece module and a hand-held apparatus, so as to solve the problem of poor applicability of extended external tools currently applied to eyepieces.

To solve the above problem, the present disclosure adopts the following technical solution.

In a first aspect, the present disclosure provides an external connection device for connecting an eyepiece to an external functional component. The external connection device disclosed includes a main body part and a locking mechanism, wherein the main body part is a cylindrical structural member, and the inner surface of the main body part is provided with a separation portion arranged in a ring shape, which separates the main body part into a connecting section and a mounting section, and the main body part is connected to the eyepiece via the mounting section;
a side wall of the connecting section is provided with a notch region and a deformation gap that is arranged in the circumferential direction of the connecting section, the notch region is in connection with the deformation gap, and is extended to an end of the connecting section away from the mounting section, and the connecting section forms a first hold hoop part and a second hold hoop part on two sides of the notch region respectively; the locking mechanism is connected to the first hold hoop part and the second hold hoop part respectively, and is configured for locking the first hold hoop part and the second hold hoop part, so that the connecting section clamps and fixes the functional component.

In a second aspect, the present disclosure provides an eyepiece module, which includes the eyepiece, a connecting assembly and said external connection device, wherein the eyepiece is connected to the mounting section via the connecting assembly.

In a third aspect, the present disclosure provides a hand-held apparatus, which includes said external connection device or said eyepiece module.

The technical solution disclosed by the present disclosure can achieve the following beneficial effects.

In the external connection device disclosed in the present disclosure, the main body part is separated into a connecting section and a mounting section by a separation portion, and is connected to the eyepiece via the mounting section and connected to an external functional component via the connecting section, thus the functional expansion of the eyepiece is realized. Specifically, a notch region is provided on the connecting section, and a first hold hoop part and a second hold hoop part are formed on two sides of the notch region. The opposite sides of the first and second hold hoop parts can move in the notch region to change the size of the notch region, locking the first and second hold hoop parts relative to each other by a locking mechanism can reduce the size of the notch region, which can reduce the accommodation space in the connecting section, and then enabling the connecting section to clamp and fix the functional component.

Compared with the related art, the external connection device disclosed in the present disclosure can undoubtedly adjust the size of the internal accommodation space of the connecting section to adapt to functional components of different sizes, so it has better applicability.

### Brief Description of the Drawings

The drawings illustrated here are used to facilitate the understanding of the present disclosure and constitute a part of the present disclosure. The schematic embodiments of the present disclosure and descriptions thereof are used to explain the present disclosure, and do not constitute an improper limitation on the present disclosure. Wherein:
Fig. 1 is a schematic structural diagram of an external connection device disclosed in an embodiment of the present disclosure;
Fig. 2 is a side view schematic structural diagram of the external connection device disclosed in the embodiment of the present disclosure;
Fig. 3 is a schematic diagram illustrating a part of the structure of the eyepiece assembly disclosed in the embodiment of the present disclosure;
Fig. 4 is an exploded schematic structural diagram of Fig. 3;
Fig. 5 is a schematic structural diagram of an eyepiece module disclosed in the embodiment of the present disclosure;
Fig. 6 is a partial cross-sectional view of the eyepiece module disclosed in the embodiment of the present disclosure;

### Description of Reference numerals:

100- eyepiece,
200- connecting assembly, 210- connecting ring, 211- second engagement portion, 220- locking ring,
300- external connection device, 310- main body part, 311- separation portion, 312- connecting section, 312a- notch region, 312b- deformation gap, 312c- first hold hoop part, 312c1- first extension portion, 312d- second hold hoop part, 312d1- second extension portion, 313- mounting section, 313a- first engagement portion, 320-locking mechanism, 321- connecting element, 322- locking element, 323- limiting element, 323a- cam portion, 323b- handle section,
400- mounting assembly, 410- fixing ring, 420- mounting ring.

### Detailed Description

In order to make the purpose, technical solution and advantages of the present disclosure clearer, the technical solution of the present disclosure will be clearly and completely described below with reference to specific embodiments and corresponding drawings of the present disclosure. Obviously, the embodiments described are only part of the embodiments of the present disclosure, and not all of them. Based on the embodiments in the present disclosure, all other embodiments obtained by those of ordinary skills in the art without creative efforts fall within the protection scope of the present disclosure.

The technical solutions disclosed in various embodiments of the present disclosure are described in detail below with reference to the drawings.

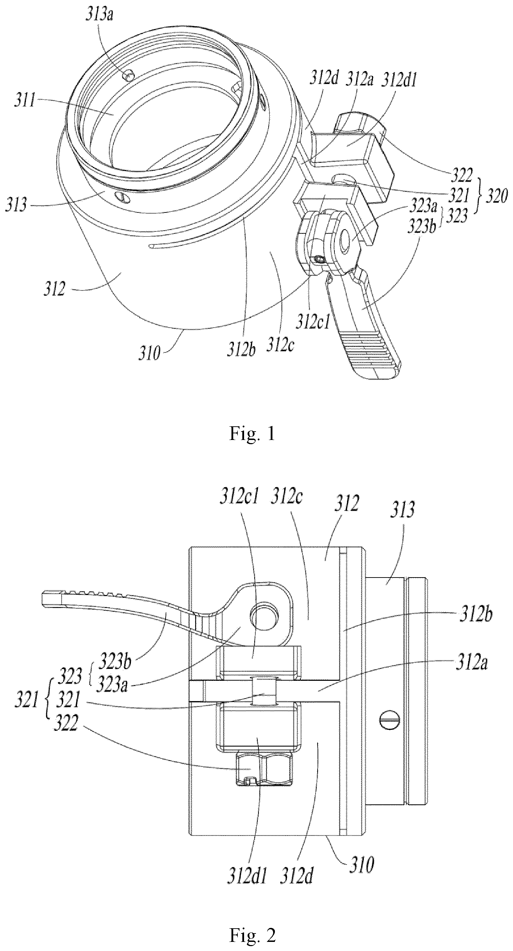

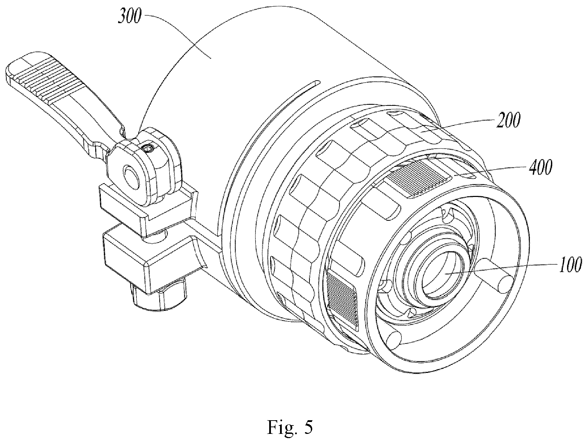

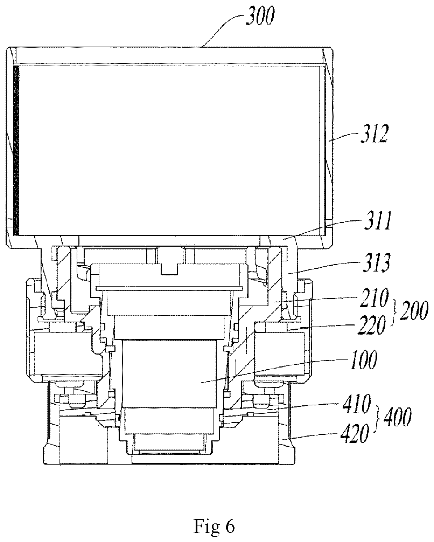

Referring to Fig. 1 to Fig. 6, an embodiment of the present disclosure discloses an external connection device 300 for connecting an eyepiece 100 to an external functional component, so as to realize the function expansion of the eyepiece 100, which can thus be used in different scenarios.

The specific type of the eyepiece 100 is not limited in the present embodiment. For example, the eyepiece 100 may be an eyepiece structure of a camera, a weapon sight, etc. Corresponding functional component may include a focusing component, a night vision component (such as a thermal imaging night vision device, etc.), a filter component, etc.

The external connection device 300 disclosed in the embodiment of the present disclosure includes a main body part 310 and a locking mechanism 320.

The main body part 310 is the main member of the external connection device 300, and the external connection device 300 is connected to the eyepiece 100 and the functional component based on the main body part 310. In this embodiment, the main body part 310 is a cylindrical structural member, that is, the main body part 310 is hollow inside and has an accommodating space, which may be used to accommodate the functional component.

When the functional component is accommodated in the main body part 310, the functional component may damage the eyepiece 100 due to its contact with the eyepiece 100 inside the main body part 310. At the same time, the imaging quality will be affected if the space between them is too small. Based on this, in this embodiment, the inner surface of the main body part 310 is provided with a separation portion 311 arranged in a ring shape, which separates the main body part 310 into a connecting section 312 and a mounting section 313. It should be understood that with such an arrangement, the separation portion 311 is located between the eyepiece 100 and the functional component, so that the eyepiece 100 and the functional component may be separated from each other, and the contact between them can be avoided. The main body part 310 is connected to the eyepiece 100 via the mounting section 313, and the functional component is located within the connecting section 312. The eyepiece 100 or functional component may be supported by abutting against the separation portion 311.

At the same time, the presence of the separation portion 311 can increase the distance between the eyepiece 100 and the functional component, which is beneficial for the functional component to act on the eyepiece 100 normally without affecting the imaging quality of the eyepiece 100. The separation portion 311 is arranged in a ring shape, that is to say, there is an avoidance space in the middle of the separation portion 311 for light propagation, and the separation portion 311 will not hinder the transmission of light in the main body part 310, and external light can enter the eyepiece 100 through the avoidance space, so as to form images in the eyes of the user.

It should be noted that the specific type of the separation portion 311 is not limited in the embodiment, which may be a support ring structure protruding from the inner surface of the main body part 310, or a plurality of support protruding structures arranged at intervals in a ring shape on the inner surface of the main body part 310.

The side wall of the connecting section 312 is provided with a notch region 312a and a deformation gap 312b that is arranged in the circumferential direction of the connecting section 312, the notch region 312a is in connection with the deformation gap 312b, and is extended to an end of the connecting section 312 away from the mounting section 313; with such an arrangement, the connecting section 312 forms a first hold hoop part 312c and a second hold hoop part 312d on two sides of the notch region 312a respectively. It should be understood that, based on the notch region 312a and the deformation gap 312b, the first hold hoop part 312c and the second hold hoop part 312d are separated from each other, so that deformation will occur when the first hold hoop part 312c and the second hold hoop part 312d are stressed. Meanwhile, since the first hold hoop part 312c and the second hold hoop part 312d are each a part of the side wall of the connecting section 312, when the first hold hoop part 312c and the second hold hoop part 312d are deformed, the side wall of the connecting section 312 will also be deformed, thus changing the size of the internal accommodation space of the connecting section 312. Further, when the size of the functional component is large, the internal accommodation space of the connecting section 312 may be increased for adaption, and when the size of the functional component is small, the internal accommodation space of the connecting section 312 may be reduced for adaption.

The locking mechanism 320, as the control member of the external connection device 300, can be used to adjust the internal accommodation space of the connecting section 312.

Specifically, the locking mechanism 320 is connected to the first hold hoop part 312c and the second hold hoop part 312d respectively, and is configured for locking the first hold hoop part 312c and the second hold hoop part 312d, so that the connecting section 312 clamps and fixes the functional component. It should be understood that when the functional component is located in the accommodation space of the connecting section 312, the connecting section 312 cannot apply a sufficient action force on the functional component to generate frictional resistance to prevent the functional component from being disengaged from the connecting section 312. In this case, the stability and reliability of the connection between the functional component and the external connection device 300 are low. While in the present embodiment, the first hold hoop part 312c and the second hold hoop part 323d can be locked based on the locking mechanism 320, that is, the first hold hoop part 312c and the second hold hoop part 312d can be kept in a stable state to maintain the deformation at that time; the deformation of the first hold hoop part 312c and the second hold hoop part 312d makes them move in the circumferential direction of the connecting section 312, thus changing the size of the notch region 312a. when the notch region 312a needs to be reduced, the accommodation space in the connecting section 312 will be reduced, so that the accommodation space of the connecting section 312 will be matched with the functional component. The first hold hoop part 312c and the second hold hoop part 312d will not continue to deform in the locked state, so that the connecting section 312 can stably and sufficiently clamp and fix the functional component.

Of course, when assembling a functional components of a different size, the deformation degree of the first hold hoop part 312c and the second hold hoop part 312d is adjusted adaptively, so that the size of the accommodation space of the connecting section 312 is adapted with the functional component.

It can be seen from the above description that in the external connection device 300 disclosed in the embodiment of the present disclosure, the main body part 310 is separated into a connecting section 312 and a mounting section 313 by the separation portion 311, and is connected to the eyepiece 100 via the mounting section 313, and connected to the external functional component through the connecting section 312, thus realizing the functional expansion of the eyepiece 100. Specifically, the connecting section 312 is provided with a notch region 312a, and a first hold hoop part 312c and a second hold hoop part 312d are formed on two sides of the notch region 312a. The opposite sides of the first hold hoop part 312c and the second hold hoop part 312d may move in the circumferential direction of the connecting section 312 to change the size of the notch region 312a, locking the first hold hoop part 312c and the second hold hoop part 312d relatively by a locking mechanism 320 may reduce the size of the notch region 312a, which may reduce the accommodation space in the connecting section 312, and then enabling the connecting section 312 to clamp and fix the functional component.

Compared with the related art, the external connection device 300 disclosed in the embodiment of the present disclosure can undoubtedly adjust the size of the internal accommodation space of the connecting section 312 to adapt to functional components of different sizes, so it has better applicability.

Referring to Fig. 1 and Fig. 2 again, in the embodiment, there may be a variety of matching relationships between the locking mechanism 320 and the first and second hold hoop parts 312c and 312d. For example, the locking mechanism 320 may be a clamping structure arranged on the outer sides of the first and second hold hoop parts 312c and 312d respectively. The first hold hoop part 312c and the second hold hoop part 312d may be clamped in opposite directions in use, thereby changing the size of the notch region 312a to change the size of the accommodation space of the connecting section 312.

In an embodiment, the first hold hoop part 312c may be provided with a first extension portion 312c1 in the radial direction of the main body part 310, and the second hold hoop part 312d may be provided with a second extension portion 312d1 in the radial direction of the main body part 310. The first extension portion 312c1 is provided opposite to the second extension portion 312d1, the locking mechanism 320 is connected to the first extension portion 312c1 and the second extension portion 312d1 respectively, and is configured for locking the first extension portion 312c1 and the second extension portion 312d1. It should be understood that since the first hold hoop part 312c and the second hold hoop part 312d are both around the central axis of the main body part 310, and they are large in size, it is not convenient for them to apply action forces uniformly and intensively, which leads to poor locking effects. In the embodiment, based on the first extension portion 312c1 and the second extension portion 312d1, the force can be applied more intensively, since the first extension portion 312c1 and the second extension portion 312d1 are oppositely arranged, the first extension portion 312c1 and the second extension portion 312d1 may move towards each other with the locking mechanism 320, thereby changing (usually reducing) the size of the notch region 312a and further changing the size of the accommodation space of the connecting section 312.

More specifically, the first extension portion 312c1 may be provided with a first through hole, and the second extension portion 312d1 may be provided with a second through hole. The locking mechanism 320 includes a connecting element 321 and a locking element 322. The connecting element 321 is provided through the first through hole and the second through hole, and is engaged with the first extension portion 312c1 at a side of the first through hole away from the second extension portion 312d1 for positional restriction. The locking element 322 can lock the second extension portion 312d1 at a side of the second through hole away from the first extension portion 312c1.

Specifically, with such an arrangement, the connecting element 321 abuts against the first extension portion 312c1 at the side of the first through hole away from the second extension portion 312d1, at this time, the locking element 322 may apply an action force to the second extension portion 312d 1 at the side of the second through hole away from the first extension portion 312c1, so that the first extension portion 312c1 and the second extension portion 312d1 are closer to each other. At this time, the first hold hoop part 312c and the second hold hoop part 312d will be deformed accordingly, which changes the size of the accommodation space of the connecting section 312. Finally, the locking element 322 is locked against the second extension portion 312d, so that the first hold hoop part 312c and the second hold hoop part 312d are in a stable state, and the deformation degree at that time is maintained. In this way, the stable and sufficient clamping and fixing effect of the connecting section 312 on the functional component can be maintained, and the functional component can be prevented from loosening and being disengaged from the connecting section 312.

In some embodiments, the connecting element 321 may be selected as a threaded rod, and the locking element 322 may be selected as a lock nut. The lock nut is in a threaded connection with the threaded rod to achieve threaded transmission, and abuts against the second extension portion 312d1. In the process of lock nut transmission, the second extension portion 312d1 may be pushed to move toward the first extension portion 312c1, and then drive the first hold hoop part 312c and the second hold hoop part 312d to be deformed. Of course, the specific types of the connecting element 321 and the locking element 322 are not limited in the embodiment. For example, the connecting element 321 may also be selected as a connecting rod, and the locking element 322 may be selected as a positioning pin, and the connecting rod may be provided with positioning holes at different positions. The positioning of the second extension portion 312d1 is limited by the engagement between the positioning pin with different positioning holes, thereby locking the first extension portion 312c1 and the second extension portion 312d 1, so as to ensure that the first hold hoop part 312c1 and the second extension portion 312d1 are deformed by required levels.

As mentioned above, the connecting element 321 is engaged with the first extension portion 312c1 at the side of the first through hole away from the second extension portion 312d1 for positional restriction. Such engagement for positional restriction can be realized by the connecting element 321 in many ways. For example, the connecting element 321 may be provided with a limiting protrusion, via which the connecting element 321 may be in snap-fit engagement with the first extension portion 312c1. It should be noted that the limiting protrusion is usually arranged at an end of the connecting element 321, but it may also be arranged on the outer wall of the middle peripheral side of the connecting element 321. That is, the engagement for positional restriction between the connecting element 321 and the first extension portion 312c1 may be realized at an end of the connecting element 321 or in other areas of the connecting element 321.

In a specific embodiment, the locking mechanism 320 may further include a limiting element 323, which is connected to the connecting element 321 at the side of the first through hole away from the second extension portion 312d1, and via which the connecting element 321 is engaged with the first extension portion 312c1 for positional restriction. Specifically, the limiting element 323, as an independent element, undoubtedly improves the convenience of assembling and disassembling the locking mechanism 320. There are many types of limiting elements 323, such as threaded fasteners, limiting blocks installed in a snap connection manner, etc.

In actual use process, by controlling the locking element 322 to lock the first extension portion 312c1 and the second extension portion 312d1, the deformation degree of the first hold hoop part 312c and the second hold hoop part 312d is changed, and the size of the accommodation space of the connecting section 312 is changed to adapt to the size of the external functional component. In this process, the operation is rather complicated, especially for small-scale adjustment. In an alternative solution, the limiting element 323 may be a cam handle, which includes a cam portion 323a and a handle section 323b extending from the cam portion 323a. The cam portion 323a is rotatably connected to the connecting element 321, and the rotation axis of the cam portion 323a is perpendicular to the central axis of the first through hole.

It should be understood that the cam portion 323a has a partial base circle profile and a partial convex profile, as shown in Fig. 2. At this time, the base circle profile abuts against the first extension portion 312c1, while the convex profile is further away from the first extension portion 312c1 compared with the base circle profile. When the cam portion 323a is rotated by the handle section 323b in a first direction, that is, when the handle section 323b rotates around the rotation axis of the cam portion 323a to drive the cam portion 323a to rotate, during one rotation stroke of the cam portion 323a, the convex profile will gradually rotate to abut against the first extension portion 312c1, and will drive the first extension portion 312c1 to move towards the second extension portion 312d1 by a first distance, which is the difference in the size between the convex profile and the base circle profile. In this way, the first hold hoop part 312c and the second hold hoop part 312d may be tightened in a small range, so as to reduce the size of the accommodation space of the connecting section 312 to adapt to a smaller functional component.

When the handle section 323b is rotated in a second direction opposite to the first direction to rotate the cam portion 323a, during one rotation stroke of the cam portion 323a, the convex profile will gradually rotate in a direction away from the first extension portion 312c1, and the driving effect of the convex profile on the first extension portion 312c1 will gradually disappear, and the base circle profile will gradually abut against the second extension portion 312d1. At this time, the first extension portion 312c1 moves by a first distance away from the second extension portion 321d1. In this way, the first hold hoop part 312c and the second hold hoop part 312d may be loosened in a small range, so that the accommodation space of the connecting section 312 may be enlarged to adapt to a larger functional component.

With such an arrangement, it is undoubtedly unnecessary for the external connection device 300 disclosed in the embodiment of the present disclosure to adjust the locking element 322 when adjusting the accommodation space in a small range, which improves the convenience of the external connection device 300.

Further, the extension direction of the handle section 323b may be parallel to the central axis of the main body part 310. With such an arrangement, the handle section 323b will not interfere with the main body part 310 in its extension direction, thus avoiding the interference to the normal use of the external connection device 300, and at the same time ensuring that the handle section 323b can drive the cam portion 323a to make a complete rotation stroke.

With continuous references to Figs. 1 to 6, based on the aforementioned external connection device 300, an embodiment of the present disclosure further discloses an eyepiece module, which includes an eyepiece 100, a connecting assembly 200 and the aforementioned external connection device 300. The eyepiece 100 is connected to the mounting section 313 via the connecting assembly 200. Specifically, the external connection device 300 can be installed on the eyepiece 100 via the connecting assembly 200 in actual use, which can realize the extension of the external connection function of the eyepiece 100. Of course, the specific structural type of the connecting assembly 200 is not limited in the embodiment, and the connecting assembly 200 can engage the eyepiece 100 with the mounting section 313 by clamping, bonding, screwing, etc..

In an alternative solution, the connecting assembly 200 may include a connecting ring 210 and a locking ring 220. The connecting ring 210 may be used as an installation basis of the eyepiece 100, which is usually sleeved on the peripheral side of the eyepiece 100, and in which an installation groove matched with the external lens barrel of the eyepiece 100 may be arranged to install and fix the eyepiece 100. The locking ring 220 is usually sleeved outside the connecting ring 210, and is movably connected to the connecting ring 210, that is, the locking ring 220 can move relative to the connecting ring 210.

Meanwhile, the outer surface of the mounting section 313 may be provided with an external thread region, and the inner surface of the locking ring 220 may be provided with an internal thread region, and the mounting section 313 may be in threaded engagement with the locking ring 220 via the external thread region and the internal thread region of the locking ring 220. It should be understood that the fixed connection between the mounting section 313 and the locking ring 220 may be realized based on the threaded engagement between the external thread region and the internal thread region, that is, the engagement between the external connection device 300 and the eyepiece 100 is realized. When disassembly is required, the mounting section 313 and the locking ring 220 may be separated by screwing the external thread region out of the internal thread region. At this time, the external connection device 300 is also removed from the connecting assembly 200.

In some embodiments, the inner surface of the mounting section 313 may be provided with at least one first engagement portion 313a, and the connecting ring 210 is provided with a second engagement portion(s) 211 the number of which is same as that of the at least one first engagement portion 313a, and the first engagement portion 313a may be in snap-fit engagement with the second engagement portion 211. It should be understood that the first engagement portion 313a and the second engagement portion 211 are in one-to-one correspondence. After the first engagement portion 313a and the second engagement portion 211 are in snap-fit engagement one by one, the engagement between the mounting section 313 and the connecting ring 210 is realized.

With such an arrangement, the mounting section 313 is connected to the connecting ring 210 and the locking ring 220 in the connecting assembly 200 at the same time, thus ensuring the reliable installation of the external connection device and the connecting assembly 200. It should be noted that the first engagement portion 313a is arranged on the inner surface of the mounting section 313, and the external thread region is arranged on the outer surface of the mounting section 313, therefore they will not interfere with each other when realizing the engagement with the second engagement portion 211 and the internal thread region of the locking ring 220.

Of course, the specific number of the first engagement portion 313a and the second engagement portion 211 is not limited in the embodiment, which can be provided as one or more. Meanwhile, the specific types of the first engagement portion 313a and the second engagement portion 211 are not limited in the embodiment, as long as they can in snap-fit engagement. For example, one of the first engagement portion 313a and the second engagement portion 211 may be a protruding structure and the other may be an indent structure, and the protruding structure and the indent structure can realize the snap-fit engagement.

In a specific embodiment, one of the first engagement portion 313a and the second engagement portion 211 is a snap-fit protrusion, and the other is an L-shaped snap-fit groove. Specifically, when the first engagement portion 313a is a snap-fit protrusion, the second engagement portion 211 is an L-shaped snap-fit groove, and when the first engagement portion 313a is an L-shaped snap-fit groove, the second engagement portion 211 is a snap-fit protrusion.

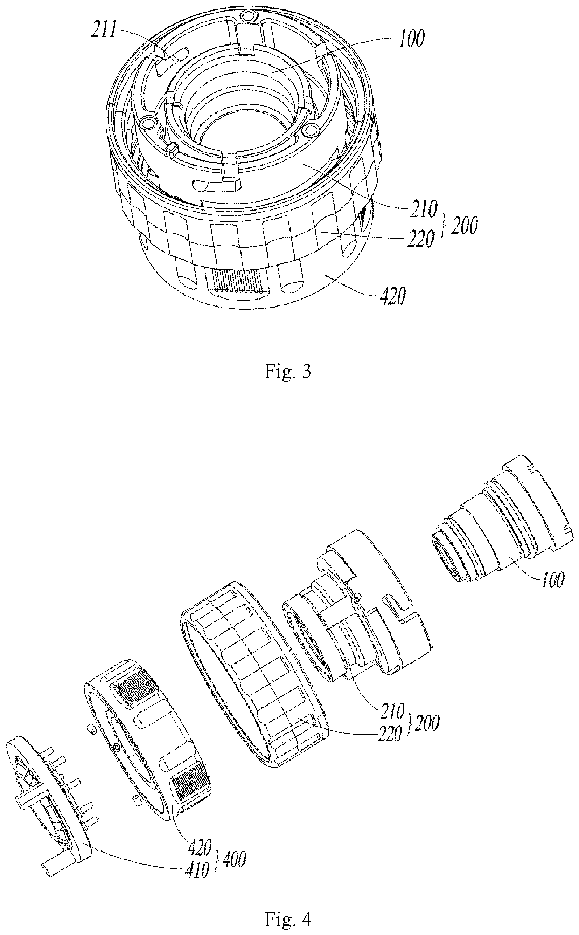

As shown in Figs. 1 and 3, for example, the first engagement portion 313a is a snap-fit protrusion and the second engagement portion 211 is an L-shaped snap-fit groove. In the specific installation process, the snap-fit protrusion may be realized by providing a projecting pin on the inner surface of the mounting section 313. The L-shaped snap-fit groove is provided with a first guide groove and a second guide groove which are intersected each other, and the snap-fit protrusion can smoothly enter the L-shaped snap-fit groove via the first guide groove, and then can be in snap-fit engagement with the L-shaped snap-fit groove by screwing the snap-fit protrusion into the second guide groove. Based on the structural characteristics of the L-shaped snap-fit groove, the accidental separation of the first engagement portion 313a from the second engagement portion 211 can be avoided, which can improve the connection reliability between the mounting section 313 and the connecting ring 210.

In some embodiments, the second engagement portion 211 can be evenly arranged on the connecting ring 210 in multiple groups, and the first engagement portion 313a can be smoothly engaged with different second engagement portions 211. Therefore, there are multiple engagement ways, which can be realized by simply rotating the external connection device at a certain angle in its circumferential direction.

In the embodiment where the limiting element 323 is a cam handle, since the cam handle is randomly arranged in the circumferential direction of the main body part 310, which is inconvenient to operate, and meanwhile it may interfere with other structures at different positions, the cam handle is generally arranged at a circumferentially fixed position of the main body part 310.

In some embodiments, a plurality of second engagement portions 211 are unevenly arranged on the connecting ring 210. With such an arrangement, when all the first engagement portions 313a and the second engagement portions 211 are snap-fit engaged, there is only one connection and engagement relationship between the mounting section 313 and the connecting ring 210. In other words, if the cam handle is arranged at the best preset position in this engagement relationship during production and processing, it will still be at the best preset position even if the cam handle is disassembled in the future use process.

In some embodiments, the eyepiece module may further include a mounting assembly 400, which may realize the connection and installation of the eyepiece 100 and the applied apparatus, such as the installation of the eyepiece 100 on a camera and the installation of the eyepiece 100 on a sight.

Specifically, the mounting assembly 400 includes a fixing ring 410 and a mounting ring 420, wherein the fixing ring 410 is sleeved on the peripheral side of the eyepiece 100, the mounting ring 420 is sleeved outside the fixing ring 410, and the mounting ring 420 is movably connected to the fixing ring 410. In addition to being connected to the eyepiece 100, the fixing ring 410 may generally be in snap-fit engagement with the apparatus to which the eyepiece 100 is applied, thereby preventing the eyepiece 100 from rotating in the circumferential direction on the applied apparatus. In addition to being movably connected to the fixing ring 410, the mounting ring 420 may generally be in threaded engagement with the applied apparatus, so that the eyepiece 100 can be fixedly mounted on the applied apparatus.

Based on the aforementioned external connection device 300 or the aforementioned eyepiece module, an embodiment of the present disclosure also discloses a hand-held apparatus, which includes the aforementioned external connection device 300 or the aforementioned eyepiece module. In this embodiment, there are many types of hand-held apparatuses, such as cameras, weapons with sights, microscopic observation devices, etc.

The above embodiments of the present disclosure focus on the differences among various embodiments. As long as there is no contradiction, the different optimization features among various embodiments may be combined to form better embodiments, which will not be repeated here for conciseness.

The above is only an embodiment of the present disclosure, and is not intended to limit the present disclosure. For those skilled in the art, there may be various modifications and variations in the present disclosure.

## Claims

1. An external connection device for connecting an eyepiece to an external functional component, wherein the external connection device (300) comprises a main body part (310) and a locking mechanism (320), wherein the main body part (310) is a cylindrical structural member, a connecting section (312) and a mounting section (313), and the main body part (310) is connected to the eyepiece (100) via the mounting section (313);
a side wall of the connecting section (312) is provided with a notch region (312a) extended to an end of the connecting section (312) away from the mounting section (313), and the connecting section (312) forms a first hold hoop part (312c) and a second hold hoop part (312d) on two sides of the notch region (312a) respectively; the locking mechanism (320) is connected to the first hold hoop part (312c) and the second hold hoop part (312d) respectively, and is configured for locking the first hold hoop part (312c) and the second hold hoop part (312d), so that the connecting section (312) clamps and fixes the functional component
**characterized in that**
an inner surface of said main body (310) is provided with a separation portion (311) arranged in a ring shape, which separates said main body part (310) into said connecting section (312) and said mounting section (313); **in that**
said side wall of said connecting section (312) is provided with a deformation gap (312b) that is arranged in a circumferential direction of the connecting section (312), and **in that**
said notch region (312a) is in connection with said deformation gap (312b).

2. The external connection device according to claim 1, wherein the first hold hoop part (312c) is provided with a first extension portion (312c1) in a radial direction of the main body part (310), and the second hold hoop part (312d) is provided with a second extension portion (312d1) in the radial direction of the main body part (310), the first extension portion (312d) is provided opposite to the second extension portion (312d1), the locking mechanism (320) is connected to the first extension portion (312d) and the second extension portion (312d1) respectively, and is configured for locking the first extension portion (312d) and the second extension portion (312d1).

3. The external connection device according to claim 2, wherein the first extension portion (312c1) is provided with a first through hole, and the second extension portion (312d1) is provided with a second through hole; the locking mechanism (320) comprises a connecting element (321) and a locking element (322), wherein the connecting element (321) is provided through the first through hole and the second through hole, and is engaged with the first extension portion (312c1) at a side of the first through hole away from the second extension portion (312d1) for positional restriction, and the locking element (322) can lock the second extension portion (312d1) at a side of the second through hole away from the first extension portion (312c1).

4. The external connection device according to claim 3, wherein the locking mechanism (320) further comprises a limiting element (323), which is connected to the connecting element (321) at the side of the first through hole away from the second extension portion (312d1), and via which the connecting element (321) is engaged with the first extension portion (312c1) for positional restriction.

5. The external connection device according to claim 4, wherein the limiting element (323) is a cam handle, which comprises a cam portion (323a) and a handle section (323b) extending from the cam portion (323a), and the cam portion (323a) is rotatably connected to the connecting element (321), and a rotation axis of the cam portion (323a) is perpendicular to a central axis of the first through hole.

6. The external connection device according to claim 5, wherein an extension direction of the handle section (323b) is parallel to a central axis of the main body part (310).

7. An eyepiece module, comprising an eyepiece (100), a connecting assembly (200) and the external connection device (300) according to any one of claims 1 to 6, wherein the eyepiece (100) is connected to the mounting section (313) via the connecting assembly (200).

8. The eyepiece module according to claim 7, wherein an outer surface of the mounting section (313) is provided with an external thread region, and an inner surface of the mounting section (313) is provided with at least one first engagement portion (313a); the connecting assembly (200) comprises a connecting ring (210) and a locking ring (220), wherein the connecting ring (210) is sleeved on a peripheral side of the eyepiece (100), the locking ring (220) is sleeved outside the connecting ring (210), and is movably connected to the connecting ring (210); the connecting ring (210) is provided with a second engagement portion(s) (211) the number of which is same as that of the at least one first engagement portion (313a), and an inner surface of the locking ring (220) is provided with an internal thread region;
the mounting section (313) can be in threaded engagement with the locking ring (220) via the external thread region and the internal thread region, and the first engagement portion (313a) can be in snap-fit engagement with the second engagement portion (211).

9. The eyepiece module according to claim 8, wherein one of the first engagement portion (313a) and the second engagement portion (211) is a snap-fit protrusion and the other is an L-shaped snap-fit groove.

10. A hand-held apparatus comprising the external connection device according to any one of claims 1 to 6, or comprising the eyepiece module according to any one of claims 7 to 9.

## Patentansprüche

1. Externe Verbindungsvorrichtung zum Verbinden eines Okulars mit einer externen Funktionskomponente, wobei die externe Verbindungsvorrichtung (300) einen Hauptkörperteil (310) und einen Verriegelungsmechanismus (320) umfasst, wobei der Hauptkörperteil (310) ein zylindrisches Strukturelement, ein Verbindungsabschnitt (312) und ein Montageabschnitt (313) ist, und der Hauptkörperteil (310) über den Montageabschnitt (313) mit dem Okular (100) verbunden ist;
eine Seitenwand des Verbindungsabschnitts (312) mit einem Kerbbereich (312a) versehen ist, der sich zu einem vom Montageabschnitt (313) entfernten Ende des Verbindungsabschnitts (312) erstreckt, und der Verbindungsabschnitt (312) einen ersten Haltebügelteil (312c) bzw. einen zweiten Haltebügelteil (312d) auf zwei Seiten des Kerbbereichs (312a) bildet; der Verriegelungsmechanismus (320) mit dem ersten Haltebügelteil (312c) bzw. dem zweiten Haltebügelteil (312d) verbunden ist, und zum Verriegeln des ersten Haltebügelteils (312c) und des zweiten Haltebügelteils (312d) so konfiguriert ist, dass der Verbindungsabschnitt (312) die Funktionskomponente festklemmt und fixiert,
**dadurch gekennzeichnet, dass**
eine Innenfläche des Hauptkörpers (310) mit einem in einer Ringform angeordneten Trennabschnitt (311) versehen ist, der den Hauptkörperteil (310) in den Verbindungsabschnitt (312) und den Montageabschnitt (313) trennt; dadurch, dass
die Seitenwand des Verbindungsabschnitts (312) mit einem Verformungsspalt (312b) versehen ist, der in einer Umfangsrichtung des Verbindungsabschnitts (312) angeordnet ist, und dadurch, dass
der Kerbbereich (312a) mit dem Verformungsspalt (312b) in Verbindung steht.

2. Externe Verbindungsvorrichtung nach Anspruch 1, wobei der erste Haltebügelteil (312c) mit einem ersten Erstreckungsabschnitt (312c1) in einer Radialrichtung des Hauptkörperteils (310) versehen ist, und der zweite Haltebügelteil (312d) mit einem zweiten Erstreckungsabschnitt (312d1) in der Radialrichtung des Hauptkörperteils (310) versehen ist, der erste Erstreckungsabschnitt (312c1) dem zweiten Erstreckungsabschnitt (312d1) gegenüberliegend vorgesehen ist, der Verriegelungsmechanismus (320) mit dem ersten Erstreckungsabschnitt (312c1) bzw. dem zweiten Erstreckungsabschnitt (312d1) verbunden ist, und zum Verriegeln des ersten Erstreckungsabschnitts (312c1) und des zweiten Erstreckungsabschnitts (312d1) konfiguriert ist.

3. Externe Verbindungsvorrichtung nach Anspruch 2, wobei der erste Erstreckungsabschnitt (312c1) mit einem ersten Durchgangsloch versehen ist und der zweite Erstreckungsabschnitt (312d1) mit einem zweiten Durchgangsloch versehen ist; der Verriegelungsmechanismus (320) ein Verbindungselement (321) und ein Verriegelungselement (322) umfasst, wobei das Verbindungselement (321) durch das erste Durchgangsloch und das zweite Durchgangsloch hindurch vorgesehen ist und auf einer Seite des ersten Durchgangslochs, die vom zweiten Erstreckungsabschnitt (312d1) entfernt ist, zur Positionsbeschränkung mit dem ersten Erstreckungsabschnitt (312c1) in Eingriff gebracht ist, und das Verriegelungselement (322) den zweiten Erstreckungsabschnitt (312d1) auf einer Seite des zweiten Durchgangslochs, die vom ersten Erstreckungsabschnitt (312c1) entfernt ist, verriegeln kann.

4. Externe Verbindungsvorrichtung nach Anspruch 3, wobei der Verriegelungsmechanismus (320) weiter ein Begrenzungselement (323) umfasst, das auf der Seite des ersten Durchgangslochs, die vom zweiten Erstreckungsabschnitt (312d1) entfernt ist, mit dem Verbindungselement (321) verbunden ist und über das das Verbindungselement (321) zur Positionsbeschränkung mit dem ersten Erstreckungsabschnitt (312c1) in Eingriff gebracht ist.

5. Externe Verbindungsvorrichtung nach Anspruch 4, wobei das Begrenzungselement (323) ein Nockengriff ist, der einen Nockenabschnitt (323a) und einen sich vom Nockenabschnitt (323a) erstreckenden Griffabschnitt (323b) umfasst, und der Nockenabschnitt (323a) drehbar mit dem Verbindungselement (321) verbunden ist, und eine Drehachse des Nockenabschnitts (323a) senkrecht zu einer Mittelachse des ersten Durchgangslochs verläuft.

6. Externe Verbindungsvorrichtung nach Anspruch 5, wobei eine Erstreckungsrichtung des Griffabschnitts (323b) parallel zu einer Mittelachse des Hauptkörperteils (310) verläuft.

7. Okularmodul, das ein Okular (100), eine Verbindungsanordnung (200) und die externe Verbindungsvorrichtung (300) nach einem der Ansprüche 1 bis 6 umfasst, wobei das Okular (100) über die Verbindungsanordnung (200) mit dem Montageabschnitt (313) verbunden ist.

8. Okularmodul nach Anspruch 7, wobei eine Außenfläche des Montageabschnitts (313) mit einem Außengewindebereich versehen ist und eine Innenfläche des Montageabschnitts (313) mit mindestens einem ersten Eingriffsabschnitt (313a) versehen ist; die Verbindungsanordnung (200) einen Verbindungsring (210) und einen Verriegelungsring (220) umfasst, wobei der Verbindungsring (210) an eine Umfangsseite des Okulars (100) gemufft ist, der Verriegelungsring (220) außerhalb des Verbindungsrings (210) gemufft ist und beweglich mit dem Verbindungsring (210) verbunden ist; der Verbindungsring (210) mit einem zweiten Eingriffsabschnitt (oder Eingriffsabschnitten) (211) versehen ist, deren Anzahl die gleiche ist wie die des mindestens einen ersten Eingriffsabschnitts (313a), und eine Innenfläche des Verriegelungsrings (220) mit einem Innengewindebereich versehen ist;
der Montageabschnitt (313) über den Außengewindebereich und den Innengewindebereich mit dem Verriegelungsring (220) in Gewindeeingriff stehen kann und der erste Eingriffsabschnitt (313a) mit dem zweiten Eingriffsabschnitt (211) in Rasteingriff stehen kann.

9. Okularmodul nach Anspruch 8, wobei einer des ersten Eingriffsabschnitts (313a) und des zweiten Eingriffsabschnitts (211) ein Rastvorsprung und der andere eine L-förmige Rastnut ist.

10. Handgehaltene Einrichtung, die die externe Verbindungsvorrichtung nach einem der Ansprüche 1 bis 6 umfasst, oder das Okularmodul nach einem der Ansprüche 7 bis 9 umfasst.

## Revendications

1. Dispositif de connexion externe pour connecter un oculaire à un composant fonctionnel externe, dans lequel le dispositif de connexion externe (300) comprend une partie de corps principal (310) et un mécanisme de verrouillage (320), dans lequel la partie de corps principal (310) est un élément structural cylindrique, une section de connexion (312) et une section de montage (313), et la partie de corps principal (310) est connectée à l'oculaire (100) par le biais de la section de montage (313) ;
une paroi latérale de la section de connexion (312) est munie d'une région d'encoche (312a) s'étendant jusqu'à une extrémité de la section de connexion (312) à distance de la section de montage (313), et la section de connexion (312) forme une première partie de cerceau de maintien (312c) et une seconde partie de cerceau de maintien (312d) sur deux côtés de la région d'encoche (312a) respectivement ; le mécanisme de verrouillage (320) est connecté à la première partie de cerceau de maintien (312c) et à la seconde partie de cerceau de maintien (312d) respectivement, et est configuré pour verrouiller la première partie de cerceau de maintien (312c) et la seconde partie de cerceau de maintien (312d) de sorte que la section de connexion (312) serre et fixe le composant fonctionnel
**caractérisé en ce que**
une surface intérieure dudit corps principal (310) est munie d'une partie de séparation (311) agencée en forme d'anneau, qui sépare ladite partie de corps principal (310) en ladite section de connexion (312) et ladite section de montage (313) ; **en ce que**
ladite paroi latérale de ladite section de connexion (312) est munie d'un espace de déformation (312b) qui est agencé dans une direction circonférentielle de la section de connexion (312), et **en ce que**
ladite région d'encoche (312a) est en liaison avec ledit espace de déformation (312b).

2. Dispositif de connexion externe selon la revendication 1, dans lequel la première partie de cerceau de maintien (312c) est munie d'une première partie d'extension (312c1) dans une direction radiale de la partie de corps principal (310), et la seconde partie de cerceau de maintien (312d) est munie d'une seconde partie d'extension (312d1) dans la direction radiale de la partie de corps principal (310), la première partie d'extension (312c1) est disposée à l'opposé de la seconde partie d'extension (312d1), le mécanisme de verrouillage (320) est connecté à la première partie d'extension (312c1) et à la seconde partie d'extension (312d1) respectivement, et est configuré pour verrouiller la première partie d'extension (312c1) et la seconde partie d'extension (312d1).

3. Dispositif de connexion externe selon la revendication 2, dans lequel la première partie d'extension (312c1) est munie d'un premier trou traversant, et la seconde partie d'extension (312d1) est munie d'un second trou traversant ; le mécanisme de verrouillage (320) comprend un élément de connexion (321) et un élément de verrouillage (322), dans lequel l'élément de connexion (321) est disposé à travers le premier trou traversant et le second trou traversant, et est en prise avec la première partie d'extension (312c1) sur un côté du premier trou traversant à distance de la seconde partie d'extension (312d1) pour une restriction de position, et l'élément de verrouillage (322) peut verrouiller la seconde partie d'extension (312d1) sur un côté du second trou traversant à distance de la première partie d'extension (312c1).

4. Dispositif de connexion externe selon la revendication 3, dans lequel le mécanisme de verrouillage (320) comprend en outre un élément de limitation (323) qui est connecté à l'élément de connexion (321) sur le côté du premier trou traversant à distance de la seconde partie d'extension (312d1), et par le biais duquel l'élément de connexion (321) est en prise avec la première partie d'extension (312c1) pour une restriction de position.

5. Dispositif de connexion externe selon la revendication 4, dans lequel l'élément de limitation (323) est une poignée à came qui comprend une partie de came (323a) et une section de poignée (323b) s'étendant à partir de la partie de came (323a), et la partie de came (323a) est connectée de manière rotative à l'élément de connexion (321), et un axe de rotation de la partie de came (323a) est perpendiculaire à un axe central du premier trou traversant.

6. Dispositif de connexion externe selon la revendication 5, dans lequel une direction d'extension de la section de poignée (323b) est parallèle à un axe central de la partie de corps principal (310).

7. Module oculaire, comprenant un oculaire (100), un ensemble de connexion (200) et le dispositif de connexion externe (300) selon l'une quelconque des revendications 1 à 6, dans lequel l'oculaire (100) est connecté à la section de montage (313) par le biais de l'ensemble de connexion (200).

8. Module oculaire selon la revendication 7, dans lequel une surface extérieure de la section de montage (313) est munie d'une région de filetage externe, et une surface intérieure de la section de montage (313) est munie d'au moins une première partie de mise en prise (313a) ; l'ensemble de connexion (200) comprend une bague de connexion (210) et une bague de verrouillage (220), dans lequel la bague de connexion (210) est emmanchée sur un côté périphérique de l'oculaire (100), la bague de verrouillage (220) est emmanchée à l'extérieur de la bague de connexion (210), et est reliée de manière mobile à la bague de connexion (210) ; la bague de connexion (210) est munie d'une ou de secondes parties de mise en prise (211), dont le nombre est le même que celui de la au moins une première partie de mise en prise (313a), et une surface intérieure de la bague de verrouillage (220) est munie d'une région de filetage interne ;
la section de montage (313) peut être en prise filetée avec la bague de verrouillage (220) par le biais de la région de filetage externe et la région de filetage interne, et la première partie de mise en prise (313a) peut être en prise par encliquetage avec la seconde partie de mise en prise (211).

9. Module oculaire selon la revendication 8, dans lequel l'une de la première partie de mise en prise (313a) et de la seconde partie de mise en prise (211) est une saillie d'encliquetage et l'autre est une rainure d'encliquetage en L.

10. Appareil portatif comprenant le dispositif de connexion externe selon l'une quelconque des revendications 1 à 6, ou comprenant le module oculaire selon l'une quelconque des revendications 7 à 9.
